# EUROPEAN PATENT SPECIFICATION

(11) **EP 1 707 508 B1**
(45) Date of publication and mention of the grant of the patent: **05.09.2007**
(21) Application number: 06111532.5
(22) Date of filing: 22.03.2006
(51) Int. Cl.: B65G 7/10

(54) **Arrangement for controlling the rolling of a cylindrical object**
Anordnung zum Kontrollieren der Rollbewegung zylindrischer Gegenstände
Dispositif de contrôle du roulis d'objets cylindriques

(30) Priority: 31.03.2005 FI 20050337
(43) Date of publication of application: 04.10.2006
(73) Proprietor: CIMCORP OY, 27400 Ulvila (FI)
(72) Inventor: Nieminen, Raimo, 28200 Pori (FI)
(74) Representative: Gustafsson, Aulis Valdemar

(56) References cited:
- FI-A- 923 815
- US-A- 3 360 096
- US-A- 3 610 392

## Description

### Field of technology

This invention relates to controlling the rolling of a cylindrical object such as a reel of paper.

### Prior art

Lots of cylindrical objects are being moved at paper mills, print shops and metal rolling mills, for example. Different types of conveyors and cranes have been developed for the movement of cylindrical objects. Rolling is a known method.

When a cylindrical object is being rolled, its movement is controlled by different types of pushers and receivers. It is also known that a cylindrical object is rolled on a slightly inclined floor plane. However, it is difficult to roll large and heavy cylindrical objects, as rolling heavy masses requires force. The pushers and receivers must be dimensioned to be strong, which makes them heavy and relatively large.

Reels of paper in particular are sensitive to damage caused by rolling. It is difficult to control the speed of the reel during rolling, and the speed may become higher than intended. This will easily make the reel bounce against the stopper and can cause mechanical damage on the surface of the paper reel. It is thus clear that stopping a heavy cylindrical object will also require a lot of force and a strong receiver.

The patent publication FI 96759 describes a known stopper for a cylindrical object that can also be used as a retarder. The solution according to the publication comprises a fixed plane and a moving plane. One end of the moving plane is mounted to the base structure by hinges that allow the moving plane to move in relation to the axis formed by the hinge, creating an inclined plane. There is a compressible hose filled with a flowing pressure medium on top of the moving plane. There is another compressible hose between the moving plane and the fixed plane. The pressure medium can flow into this second hose when a cylindrical object rolls on top of the stopper. The hose located on top of the moving plane will be compressed, and the pressure medium contained in the fluid tries to flow into the other hose. When the second hose becomes filled with the pressure medium, the second hose expands and the moving plane moves up. The moving object is thus stopped by the combined effect of the hose filled with pressure medium and the inclination of the moving plane that reduces the rolling speed of the reel. If the solution is used as a stopper, the reel will stop on top of the inclined plane. If the solution is used as a retarder, the reel is allowed to roll over the inclined plane without stopping. This solution is relatively heavy, and controlling the stopping of the reel on the inclined plane requires great accuracy. Furthermore, as the reel rolls over the inclined plane to the horizontal plane, mechanical damage may arise on the surface of the reel.

### Short description of invention

The objective of the invention is to eliminate said problems with prior art solutions. The objective will be achieved as described in the independent claim. The dependent claims describe various embodiments of the invention in more detail.

An arrangement according to the invention comprises at least one pressure element 3 to be filled with a pressure medium, such as a compressible hose or mat. The pressure element comprises a first end and a second end.

The arrangement also comprises a fixed plane 2, 22, with conduits 4 for conducting the first and second ends of the pressure element 3 located on top of the fixed plane to the underside of the plane. The conduit for the first end is located at a different part of the planned line of rolling the cylindrical object compared to the conduit for the second end.

Furthermore, the arrangement includes control means 6 for filling the pressure element with a pressure medium and draining it of the pressure medium, as well as connection means 5 for both ends of the pressure element. The connection means can be used to connect the pressure element 3 to the control means 6.

The control means can be used to fill the pressure element in a controlled manner through either or both ends of the pressure element, as well as drain it in a controlled manner through either or both ends. Thus the state of motion of the cylindrical object on top of the plane 2 and the pressure element 3 can be changed from rolling state to stopped state and vice versa in a controlled manner in the direction of the desired line of rolling.

The arrangement according to the invention provides for very good control of the rolling movement of a cylindrical object. Furthermore, the structure of the arrangement according to the invention is light compared to prior art solutions, as the state of motion of the cylindrical object can be controlled using force imposed on the object by a pressure element filled with a pressure medium, eliminating the need for other structures (such as pushers or stoppers).

Furthermore, the solution according to the invention is applicable for use on a horizontal as well as an inclined plane.

### List of figures

In the following, the invention is described in more detail by reference to the enclosed drawings, where
- Figure 1: illustrates an example of an arrangement according to the invention in which the plane is inclined,
- Figure 2: illustrates an example of an arrangement according to the invention in which the plane is horizontal,
- Figure 3: illustrates an example of an embodiment of control means according to the invention,
- Figure 4: illustrates another example of an embodiment of control means according to the invention,
- Figure 5: illustrates a third example of an embodiment of control means according to the invention,
- Figure 6: illustrates a fourth example of an embodiment of control means according to the invention,
- Figure 7: illustrates a fifth example of an embodiment of control means according to the invention,
- Figure 8: illustrates a sixth example of an embodiment of control means according to the invention,
- Figure 9: illustrates an example with three arrangements according to the invention in sequence to create one large arrangement according to the invention,
- Figure 10: illustrates another example with three arrangements according to the invention in sequence to create one large arrangement according to the invention,
- Figure 11: illustrates a third example with three arrangements according to the invention in sequence to create one large arrangement according to the invention.

### Description of the invention

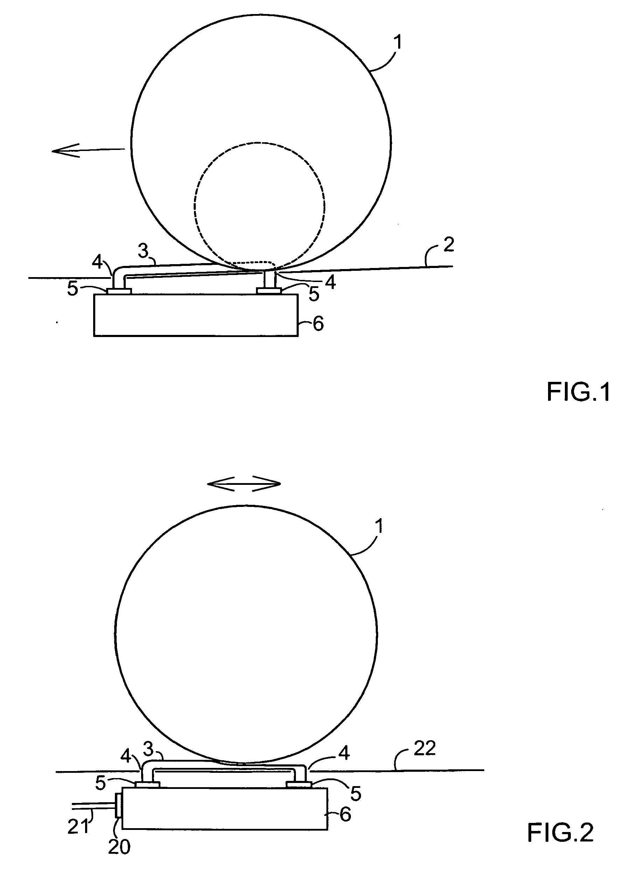

Figure 1 illustrates an example of an arrangement according to the invention. In the arrangement illustrated in the example, the plane 2 is inclined. The intention is that a cylindrical object 1, such as a reel of paper, is placed on the plane so that its direction of rolling is downwards along the inclined plane. The arrow in the figure illustrates the direction of rolling. There is a pressure element 3 on top of the plane, and it can be filled with a pressure medium. The pressure element can be a compressible hose or mat, for example. Several pressure elements can be placed on the plane side by side in the axial direction of the cylindrical object. Parallel pressure elements 3 can be placed in a staggered arrangement. Pressure elements can also be placed sequentially on the plane.

Conduits 4 are arranged on the plane 2 for conducting the ends of the pressure element 3 below the top surface of the plane. The conduits for the ends of an individual pressure element are located in different parts of the planned line of rolling the cylindrical object. The arrow in the figure also illustrates the direction of the line of rolling downwards on the inclined plane. Thus, when rolling, the cylindrical object can only press a single conduit for a pressure element end at a time.

The ends of the pressure element 3 that have been conducted below the top surface of the plane 2 are connected to control means 6 by which the pressure element 3 can be filled with pressure medium and drained of pressure medium. The connection between the control means and the pressure element is carried out by using connection means 5 at both ends of the pressure element.

The control means 6 can be used to fill the pressure element 3 in a controlled manner through either or both ends of the pressure element, as well as drain it in a controlled manner through either or both ends. Filling and draining the pressure element using control means makes it possible to change the state of motion of a cylindrical object on top of the plane 2 and the pressure element 3 from rolling state to stopped state and vice versa in a controlled manner in the direction of the desired line of rolling.

When the cylindrical object 1 rolls down the plane 2 in the example of Figure 1, it compresses the pressure element 3 and causes the pressure of the pressure medium within the pressure element to increase. This pressure is controlled by control means 6 so that the rolling speed of the cylindrical object can be reduced or the object can be made to stop on top of the pressure element. The cylinder drawn with a dashed line illustrates the fact that the arrangement is suitable for different sizes of cylindrical objects 1.

Figure 2 illustrates an example of an arrangement according to the invention in which the plane 22 is horizontal. Furthermore, the control means 6 in Figure 2 comprise a supply connection 20 to an external source of pressure medium 21. The supply connection is used to supply a pressure medium into the control means from which it can be further conducted to the pressure element.

For example, the pressure medium can be compressed air or other compressed gas suitable for the purpose. The pressure medium can also be a suitable liquid such as water. In the embodiment of Figure 1, the circulation of the pressure medium is closed; thus, when the pressure element is drained, the pressure medium flowing out of the pressure element is recirculated within the control means for feeding it back to the pressure element. No external source of pressure medium is required. In the embodiment of Figure 2, the circulation of the pressure medium is open; when the pressure element is drained, the pressure medium flowing out of the pressure element is not recirculated but conducted out of the control means. For example, compressed air can be released to ambient air. Water serving as a pressure medium can be conducted to the sewer.

The situation in Figure 2 illustrates the versatile possibilities of the arrangement according to the invention to move a cylindrical object along its line of rolling. The bidirectional arrow illustrates this. In the situation in Figure 2, the cylindrical object has rolled from the right to the left on top of the pressure element 3 and compressed the pressure element. The pressure in the left-hand section of the pressure element has increased, and the cylindrical object can be stopped by controlling the pressure. The stopped cylindrical object can be moved back to the right by using the control means 6 to increase the pressure of the pressure medium in the left-hand section of the pressure element 3. The movement of the stopped object can also be continued to the left by increasing the pressure of the pressure medium in the right-hand section of the pressure element 3.

In the situation in Figure 2, the cylindrical object can be moved back and forth on the horizontal plane 22 but this is also possible on an inclined plane. In other words, the arrangement according to the invention also allows a cylindrical object to be moved upwards along an inclined plane.

The plane 2, 22 in an arrangement according to the invention is in a horizontal position or in an inclined position in relation to the horizontal. The plane can be a sheet or mat placed on a base. The sheet can be a plywood board, for example. It is reasonable to use a mat if the cylindrical object is particularly sensitive to damage caused by rolling. The plane can also be a combination of a plywood board and a mat. The base for the plane can be a concrete slab or a separate support structure.

The plane has conduits 4 for the ends of the pressure elements. The conduit can be an opening in the plane or an edge area of the plane. The edge of the plane can also be shaped to be more suitable for the end of the pressure element. If a separate support structure is used as the base for the plane, space will remain or can easily be arranged below the plane 2, 22 for the placement of the pressure element ends, the connection means 5 and the control means 6. However, the control means can also be placed close to the plane, such as to the side of the area formed by the plane.

The surface of the base, such as concrete, can also serve as the plane 2, 22. In this case, the conduit 4 is a recess or opening in the base.

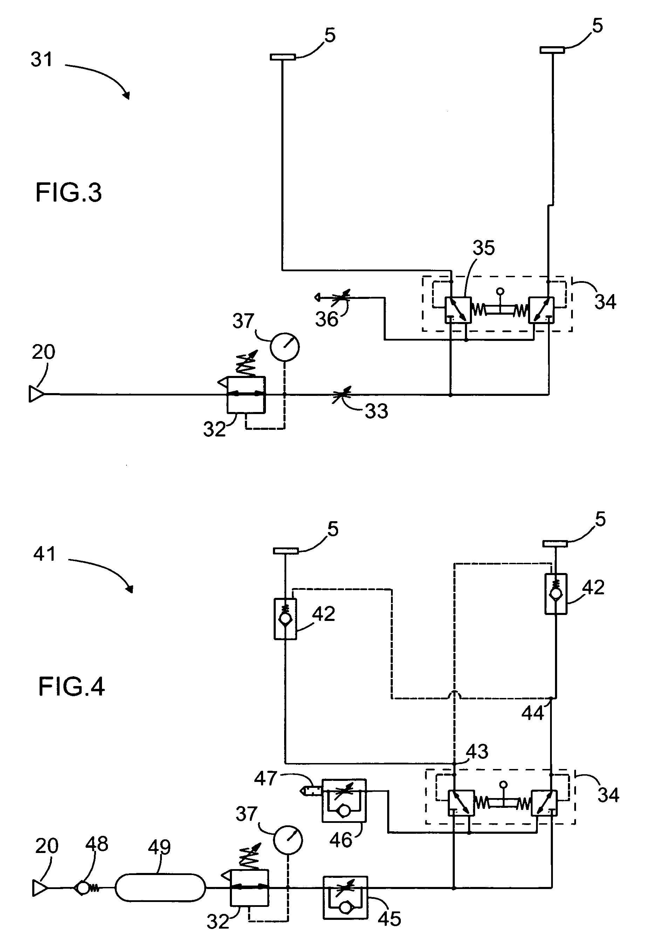

The control means 6 according to the invention can be implemented in several ways depending on the application. For example, if an application only requires a retarder for a cylindrical object, the control means do not need to be able to move a cylindrical object back and forth. Different types of control means can also be created for the same application. Figures 3 to 8 illustrate various embodiments of the control means 6.

Figure 3 illustrates an example of an embodiment of the control means 6 according to the invention. In the embodiment, the control means 31 comprise a supply connection 20 to an external source of pressure medium, a pressure relief valve 32 connected to the supply connection 20 to limit the pressure of the pressure medium, a pressure gauge 37 to indicate the pressure limited by the pressure relief valve, and a first choke valve 33 connected to the pressure relief valve on the side of pressure to be limited. Furthermore, the control means comprise a second choke valve 36 to limit the flow of the pressure medium from the pressure element to outside the control means 6, and a pressure control valve module 34 that can be connected to the connection means 5 at the ends of the pressure element 3 and is connected to the first choke valve 33 and the second choke valve 36.

The pressure relief valve 32 can preferably be set to the desired value. The pressure gauge 37 is used for setting the pressure. The pressure can be set to 3 bar, for example. The choke valves 33, 36 are used to affect the flow rates of the pressure medium.

The pressure control valve module 34 controls the filling of the pressure element 3 with the pressure medium and draining of the pressure medium. The module comprises two 3/2 pressure control valves 35, both of which are connected from the valve connections to said first choke valve 33 and second choke valve 36. Furthermore, one connection on both valves can be connected to the connection means 5 in the pressure element. The pressure control valves can be controlled so that when one of the valves 35 is set to allow the flow of the pressure medium to one end of the pressure element, the other valve will allow the flow of the pressure medium from the other end of the pressure element through the second choke valve 36 to outside the control means. The valves can be controlled using a mechanical lever, electric control or other control mechanism suitable for the purpose.

The control means 6 in Figure 3 allow the rolling of a cylindrical object to be retarded, stopped or moved to the desired direction. In other words, a stationary cylinder located on top of the pressure element 3 can be set to move in the desired direction.

Figure 4 illustrates another example of an embodiment 41 of the control means according to the invention; this is actually a variation of the embodiment in Figure 3. In the embodiment in Figure 4, the control means 6 also comprise a non-return valve 48 connected to the supply connection 20 to prevent the flow of the pressure medium from the control means 6 to the external source of pressure medium, a pressure medium tank 49 connected to the non-return valve at the supply connection 20, as well as a pressure relief valve 32. A pressure gauge 37 is installed in connection with the pressure relief valve. Thus the non-return valve 48 prevents any over-pressurised pressure medium from flowing from the control means back to the external source of pressure medium 21. The tank 49 functions as a reserve for the pressure medium.

The embodiment in Figure 4 also comprises non-return valves 42 specific to each connection means that can be connected to each connection means 5. These non-return valves are connected to the pressure control valve module 34 so that they allow the pressure medium to flow to the pressure element 3 and can each be controlled so that under control, they allow the pressure medium to flow out of the pressure element 3. In this example, the non-return valves are controlled by the pressure of the pressure medium. The pressure required for control is supplied to an individual non-return valve from the supply of the opposite end of the pressure element. Thus the supply 43 that supplies pressure medium to the first end of the pressure element also supplies control pressure to the non-return valve in the second end of the pressure element. Correspondingly, the supply 44 that supplies pressure medium to the second end of the pressure element also supplies control pressure to the non-return valve in the first end of the pressure element. As illustrated in Figure 4, the supplies 43, 44 are practically connections from the directional valves of the control module 34 to the connection elements 5. The non-return valves 42, 48 in the embodiment are preferably spring-loaded.

In the embodiment in Figure 4, the choke valves in Figure 3 are replaced by the one-way restrictor valves 45, 46. This means that in Figure 4 as well, the one-way restrictor valves can be simple choke valves. A one-way restrictor valve provides free flow of pressure medium in the desired direction. It is preferable to fit the one-way restrictor valve 46 on the exhaust route with a muffler 47 if the pressure medium is a gas such as air.

The operation of the embodiment in Figure 4 is similar to the embodiment in Figure 3. When the pressure element is being filled from either end, the non-return valve in the other end of the pressure element is instructed to open so that it allows the pressure medium to flow out of the pressure element.

The directional valves used in the pressure control valve module 34 of the examples can also be of a type other than 3/2. For example, a directional valve of type 5/2 can be used. 5/2 also provides additional features - allowing the pressure element to be filled and drained simultaneously from both ends of the pressure element. These two examples illustrate that the control means can be implemented in many different ways. The implementation can include a pressure medium tank, for example, if it is considered necessary for practical reasons.

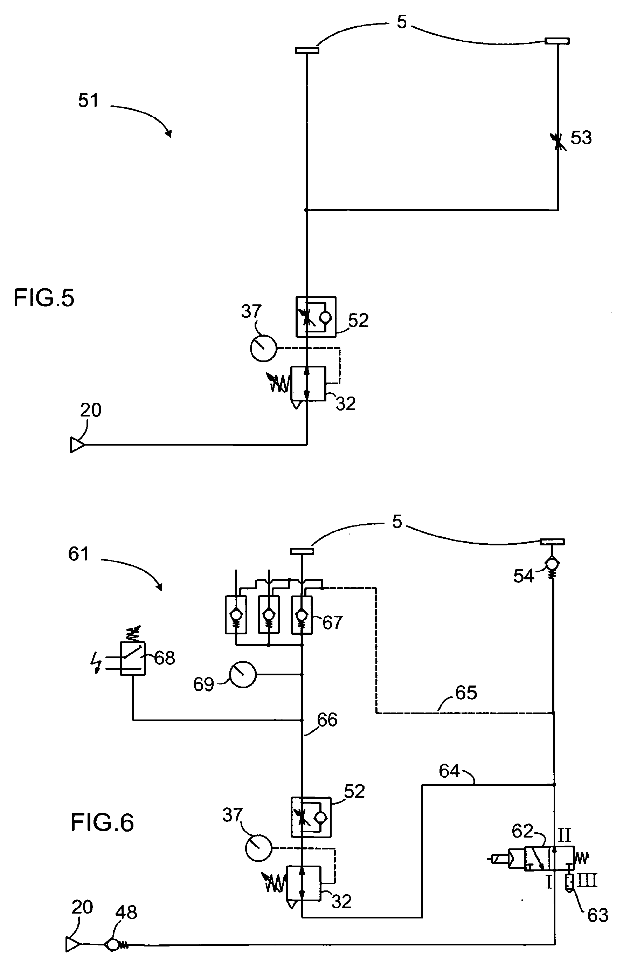

Figure 5 illustrates a third example of an embodiment of control means according to the invention. This embodiment 51 is intended to function as a retarder and stopper of the rolling movement of a cylindrical object.

The embodiment in Figure 5 comprises a supply connection 20 to an external source of pressure medium, a pressure relief valve 32 connected to the supply connection 20 to limit the pressure of the pressure medium, a pressure gauge 37 to indicate the pressure limited by the pressure relief valve, and a one-way restrictor valve 52 connected to the pressure relief valve on the side of limited pressure so that it allows free flow of the pressure medium towards the pressure element 3. The one-way restrictor valve 52 can also be functionally connected to the connection means 5 at both ends of the pressure element 3. The connection means 5 at the first end of the pressure element can be connected directly to the one-way restrictor valve. The connection means 5 at the second end of the pressure element can be connected through the choke valve 53. The choke valve retards the flow of the pressure medium in the second end of the pressure element.

The pressure element is filled primarily through the first end of the pressure element as the choke valve 53 retards flow to the second end of the pressure element. Thus the pressure element is also drained primarily through the first end of the pressure element. The choke valve 53 also restricts the flow of pressure medium flowing from the second end of the pressure element. The exhaust flow goes through the one-way restrictor valve 52 to the pressure relief valve 32 from which it is released to outside the control means 51.

In this embodiment 51, the intention is that the cylindrical object will flow to the top of the pressure element from the direction of the second end of the pressure element - that is, the end in which flow is restricted by the one-way restrictor valve 52 and the choke valve 53. The resistance of the choke valve 53 is lower than that of the one-way restrictor valve 52. The pressure relief valve 32 restricts the pressure to the range of 1 to 2.5 bar, for example.

Components considered necessary can be added to the embodiment in Figure 5, such as a one-way restrictor valve and a pressure medium tank between the supply connection 20 and the pressure relief valve 32. The embodiment 51 is applicable for use on a horizontal or inclined plane.

Figure 6 illustrates a fourth example of an embodiment 61 of the control means according to the invention. Similar to Figure 5, this embodiment functions as a retarder and stopper of a cylindrical object. The control means 6 in the embodiment 61 comprise a supply connection 20 to an external source of pressure medium, a non-return valve 48 connected to the supply connection 20, as well as non-return valves 67, 54 specific to the connection means that can be connected to each connection means to allow the pressure medium to flow out of the pressure element 3 when the pressure of the pressure medium within the pressure element is sufficiently high.

At least one of the non-return valves 67, 54 specific to the connection means is controllable so that it allows the pressure medium to flow into the pressure element 3. In practice, this means that the non-return valves associated with the first end of the pressure element are controlled. Figure 6 illustrates three controlled non-return valves for the first ends of the pressure elements. This means that there are three pressure elements, and each end of a pressure element has its own non-return valve. This is also true of the non-return valves at the second ends of the pressure elements. For example, if there are five pressure elements 3, there is a non-return valve for the first and second ends of each pressure element. The other components of the embodiment are shared between the pressure elements.

The embodiment in Figure 6 also comprises a directional valve 62 to control the flow of the pressure medium into and out of the pressure element(s). The first connection of the directional valve is connected to the non-return valve 48 at the supply connection, while the second connection is functionally connected to the non-return valves 67, 54 specific to the connection means. The third connection of the directional valve is connected to a space outside the control means - preferably through a muffler 63 when the pressure medium is air.

The second connection of the directional valve 62 is connected through route 64 to the pressure relief valve 32 that is further connected to the one-way restrictor valve 52. The one-way restrictor valve allows free flow of the pressure medium towards the pressure element(s). The pressure relief valve limits the pressure of the pressure medium in section 66 of the control means that is connected to the non-return valve 67 at the first end of the pressure element 3. The pressure relief valve is also associated with a pressure gauge 37 for indicating the pressure limited by the pressure relief valve.

The embodiment 61 also comprises a pressure switch 68 connected to the connection 66 between the one-way restrictor valve 52 and the non-return valve 67 connected to it for the purpose of detecting the pressure of the pressure medium and providing a control signal to the directional valve 62. The pressure switch 68 in Figure 6 provides an electrical control signal to the winding of the directional valve 62. The directional valve can also be controlled hydraulically or pneumatically, for example, depending on the pressure medium used. For the sake of safety, another pressure gauge 69 can be connected to said connection.

The operation of the embodiment 61 in Figure 6 mainly corresponds to the operation of the embodiment 51 in Figure 5. The rolling direction of the cylindrical object is from the second end of the pressure element towards the first end. The pressure element can be filled through a controlled non-return valve at the first end. The directional valve 62 in Figure 6 is in the non-driven position, allowing the pressure medium to flow to the side of the second connection of the directional valve and further to the first end through the pressure relief valve 32. The second connection of the directional valve also has a control connection 65 to the controlled non-return valve at the first end of the pressure element and a non-return valve 54 at the second end of the pressure element. When the cylindrical object compresses the pressure element, the pressure of the pressure medium increases in the first end of the pressure element and the non-return valve 67 allows the pressure medium to flow towards the pressure relief valve. The pressure increases within the connection 66 between the directional valve 67 and the pressure relief valve, activating the pressure switch 68 that provides a signal for controlling the directional valve 62. The controlled directional valve changes position, and the pressure medium is conducted from the second connection of the directional valve to the third connection - that is, outside the control means. Thus the over-pressurised pressure medium in the first end of the pressure element flows out of the control means through the pressure relief valve 32. Any over-pressure in the second end of the pressure element and the control pressure of the controlled non-return valves 67 is allowed to flow out of the control means through the directional valve 62.

It should be noted that the directional valve 62 in the embodiment in Figure 6 is a 3/2 valve but can also be a 5/2 valve.

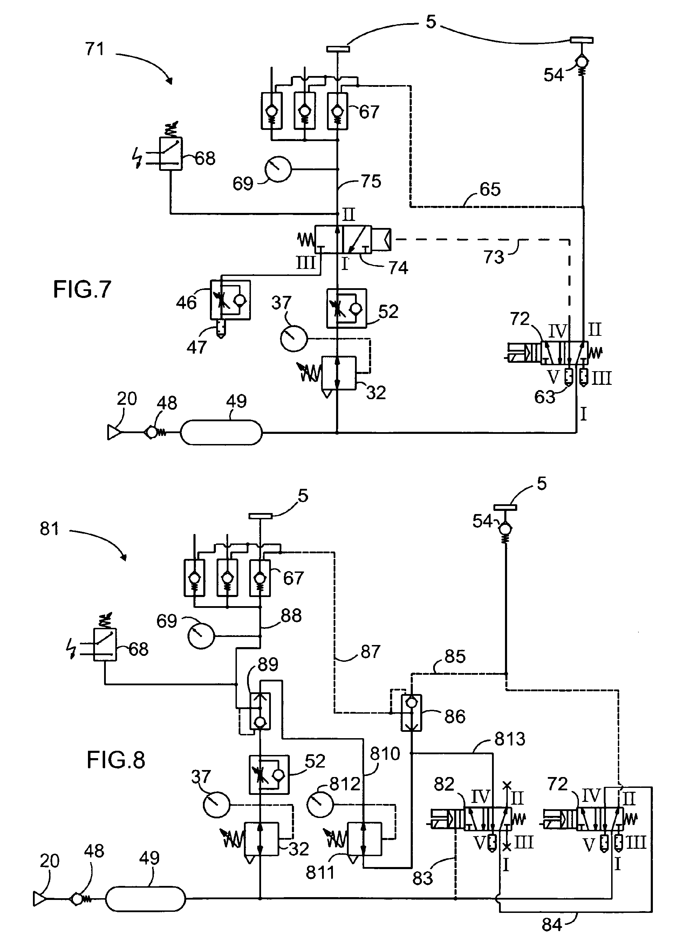

Figure 7 illustrates a fifth example of an embodiment 71 of the control means according to the invention, similar to the embodiment in Figure 6. The control properties of the arrangement can be affected by using two directional valves in this embodiment instead of one.

Similar to the embodiment in Figure 6, the control means 71 of the embodiment comprise a supply connection 20 to an external source of pressure medium, a non-return valve 48 connected to the supply connection, non-return valves 67, 54 specific to the connection means, a pressure relief valve 32, a pressure gauge 37 to indicate the pressure limited by the pressure relief valve, a one-way restrictor valve 52 connected to the pressure relief valve 32 on the side of pressure to be limited, a directional valve 72, a pressure switch 68 and an optional second pressure gauge 69.

The embodiment 71 also comprises an optional pressure medium tank 49 connected to the non-return valve 48 of the supply connection, a second directional valve 74, and a second one-way restrictor valve 67 that can also be replaced by an ordinary choke valve.

The pressure medium tank 49 (or, alternatively, the non-return valve 48 of the supply connection) is connected to both the pressure relief valve 32 and the directional valve 72. In this case, the first directional valve is a 5/2 valve. Its first connection is connected to said pressure tank 49, while the second connection is connected to the non-return valve 54 at the second end of the pressure element and the control of the non-return valve 67 at the first end. Thus the first-end connection 65 exists for the control of the directional valve. The third and fifth connection are connected outside the control means - when using gas, preferably through a muffler 63. The fourth connection of the first directional valve 72 has a control connection 73 to the control part of the second directional valve 74.

The first connection of the second directional valve 74 is connected to the first one-way restrictor valve 52 that allows free flow towards the first end of the pressure element. The second connection of the second directional valve has a connection 75 to the controlled non-return valve at the first end of the pressure element, and the third connection is connected to the second one-way restrictor valve 46 that is connected outside the control means. If the pressure medium is a gas, such as air, it is preferable to use a muffler 47 in connection with the second one-way restrictor valve.

When the cylindrical object increases the pressure of the pressure medium at the first end of the pressure element, the pressure also increases within the connection 75 between the non-return valve 67 at the first end and the second directional valve 74, making the pressure switch 68 provide a control signal to the first directional valve 72. The first directional valve changes position so that the pressure medium is allowed to flow through the fourth connection to the control part of the second directional valve 74, changing the position of the second directional valve. In this case the connection 75 between the non-return valve 67 at the first end and the second directional valve 74 is connected to the third connection of the second directional valve. The pressure medium is allowed to flow out of the control means through the third connection and the second one-way restrictor valve 46. At the same time, the second connection of the first directional valve is connected to outside the control means through the third connection, allowing the pressure medium to flow out of the control connection 65.

Figure 8 illustrates a sixth example of an embodiment 81 of the control means according to the invention. This embodiment is particularly well suited for inclined surfaces on which the intention is to retard and stop a cylindrical object, and potentially move it back up on the inclined plane.

The embodiment in Figure 8 comprises a supply connection 20 to an external source of pressure medium, a non-return valve 48 connected to the supply connection 20, as well as non-return valves 67, 54 specific to the connection means that are connected to each connection means to allow the pressure medium to flow out of the pressure element 3 when the pressure of the pressure medium within the pressure element is sufficiently high. At least one of the non-return valves at the ends of the pressure element is controllable so that it allows the pressure medium to flow into the pressure element 3.

The embodiment also comprises a pressure relief valve 32 connected to a pressure medium tank 49, a pressure gauge 37 to indicate the pressure limited by the pressure relief valve, and a one-way restrictor valve 52 connected to the pressure relief valve 32 on the side of limited pressure so that it allows free flow of the pressure medium towards the pressure element.

The embodiment also comprises a first quick exhaust valve 89 with its non-return valve input connected to the pressure relief valve 52 and the intermediate input connected to a controllable non-return valve 67 at the first end of the pressure element. The connection 88 between the non-return valve 67 and the quick exhaust valve 89 is fitted with a pressure switch 68 to detect the pressure of the pressure medium and provide a control signal. An additional pressure gauge 69 can also be connected to this connection 88.

The embodiment in Figure 8 also comprises a first directional valve 72 with its first connection connected to the connection between the pressure medium tank 49 and the pressure relief valve 32, the second connection connected to the non-return valve 54 specific to the connection means at the second end of the pressure element, and the fourth and fifth connections connected to a volume outside the control means. The fourth connection of the first directional valve 72 is connected to the first connection of the second directional valve 82 in the embodiment. The second and third connections of the second directional valve are closed. The fifth connection is connected to a volume outside the control means. The auxiliary control of the second directional valve is connected 83 to the pressure in the pressure medium tank 49.

The embodiment also includes a second pressure relief valve 811 with the limited-pressure side connected 810 to the output of the first quick exhaust valve 89 and the other side connected to the fourth connection of the first directional valve 82. The second pressure relief valve 811 is also associated with a second pressure gauge 812 for indicating the pressure limited by the second pressure relief valve.

The embodiment also includes a second quick exhaust valve 86 with its output connected to the connection 813 between the second pressure relief valve 811 and the second directional valve 82. The non-return valve input of the second quick exhaust valve 86 is connected to the connection between the first directional valve 72 and the non-return valve 54 at the second end of the pressure element. The intermediate input of the second quick exhaust valve 86 is connected to the control of the controlled non-return valve 67.

When the cylindrical object causes an increase of pressure in the first end of the pressure element, this is detected by the pressure switch 68. Because the limiting pressure of the first pressure relief valve 32 (for example, 1 to 2.5 bar) is set to be lower than the limiting pressure of the second pressure relief valve 811 (for example, 3 bar), the pressure medium is allowed to flow out of the control means through the first pressure relief valve.

The pressure switch 68 simultaneously issues a control signal to the first directional valve 72 that cuts the supply of pressure medium to the directional valves 54, 67 at the ends of the pressure element and simultaneously allows the control connection 87, 85 of the first-end directional valve to be drained through the third connection of the first directional valve to outside the control means. This allows the rolling movement of the cylindrical object to be retarded and stopped.

If the stopped cylindrical object needs to be moved back up on the inclined plane, a control signal is issued to the second directional valve 82 to change its position. The pressure medium flows through the still driven first directional valve 72 and the fourth connection of the second directional valve to the second quick exhaust valve 86 and the second pressure relief valve 811. The pressure medium flowing to the second quick exhaust valve flows through the control connection 87 to the controlled directional valve 67 at the first end of the pressure element, opening it for the purpose of filling the pressure element. The actual pressure medium filling the pressure element flows through the second directional valve 811, the first quick exhaust valve 89 and the controlled non-return valve 67 to the first end of the pressure element, making the filling pressure element to move the cylindrical object up on the inclined plane.

The auxiliary control 83 is required to control the second directional valve 82 when the first directional valve 72 is not driven. However, for such a situation, the second directional valve can also be fitted with a control in which auxiliary control is not required.

The embodiments in Figures 3 to 8 illustrate embodiments in which the pressure medium is a gas or liquid suitable for the purpose. The embodiments also illustrate that the control means 6 can be implemented in many different ways.

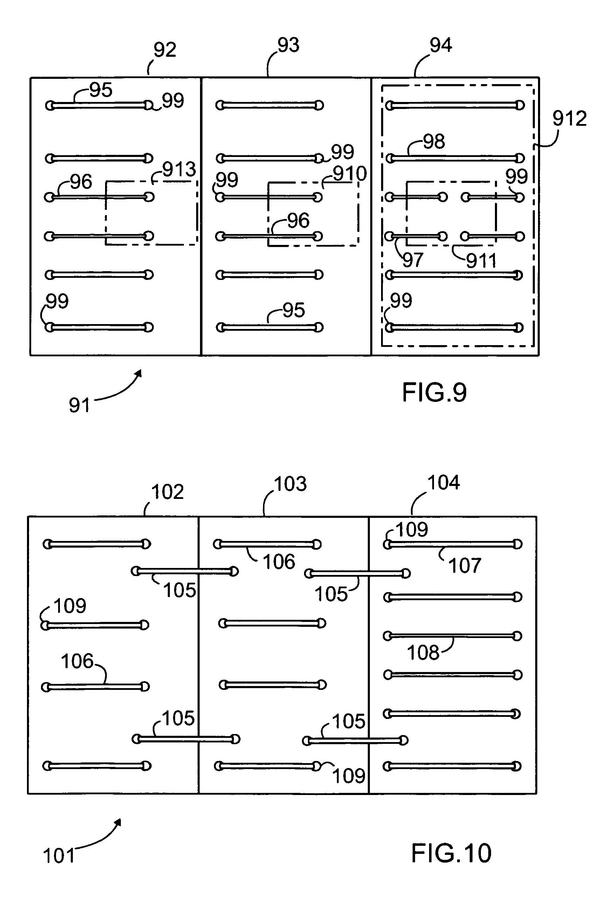

Figure 9 illustrates an example with several arrangements according to the invention in sequence to create a larger area 91 for moving a cylindrical object. This example has three sequential arrangements 92, 93, 94, one of them 94 being different from the two others 92, 93. Each of the arrangements has hoses 95, 96, 97, 98 arranged in parallel, and these can be filled with and drained of a pressure medium. The ends of the hoses are conducted through conduits 99 below the top surface of the planes where they are connected to the control means.

The dual dotted lines 912, 911, 910, 913 illustrate cylindrical objects on top of the plane. As can be seen, the same arrangement can be suitable for different cylindrical objects.

In the two similar arrangements 92, 93, the hoses are of equal length but the middle hoses 96 are narrower than the other hoses 99 in the arrangement. In the dissimilar arrangement 94, the middle hoses 97 are also shorter than the other hoses 98. It can thus be seen that the hoses functioning as the pressure elements can be of different gauges and lengths depending of the arrangement.

Figure 10 illustrates another example with three arrangements 102, 103, 104 according to the invention in sequence. In each arrangement, the pressure elements or the hoses 105, 106, 107, 108 are arranged in parallel, but some of them 105 are located staggered to the others. The ends of the hoses are conducted through conduits 109 to the underside of the planes. The sequential arrangements form a larger arrangement 101 and are arranged so that said staggered hoses 105 are staggered between the sequential arrangements, contributing to the connection between the sequential arrangements.

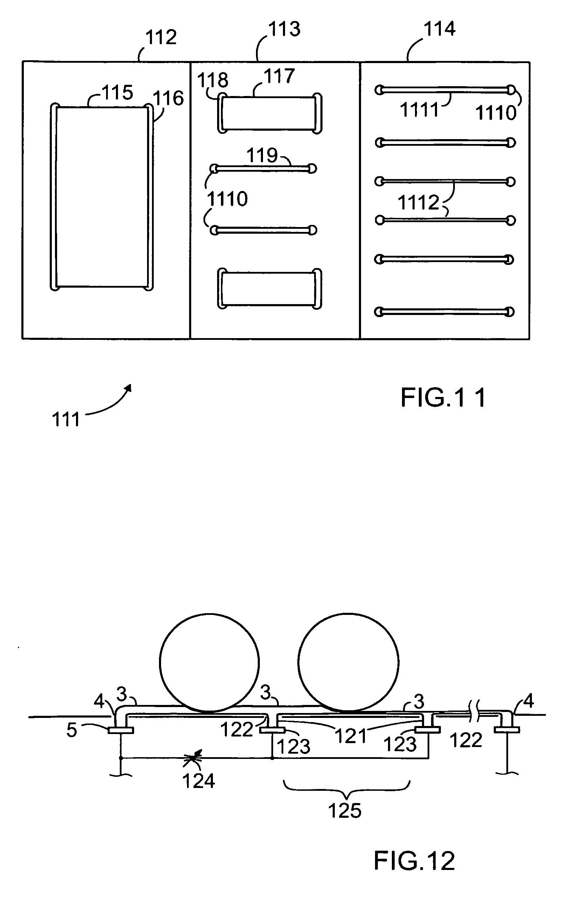

Figure 11 illustrates a third example with three arrangements 112, 113, 114 according to the invention in sequence to create one large arrangement 111 according to the invention. In one of the arrangements 112, the pressure element is a compressible mat 115, the ends of which are conducted below the top surface of the plane through the conduits 116. The second arrangement has compressible mats 117 and hoses 119 in parallel. The plane has conduits 118, 1110 suitable for each pressure element. In the third arrangement 114, the pressure elements are parallel hoses 1111, 1112 with conduits 1110. The middle hoses 1112 are thinner than the other hoses.

It can be concluded from the examples in Figures 9 to 11 that the desired number of arrangements according to the invention can be arranged in sequence. The number three is only an example.

At least one pressure element 3 in an arrangement according to the invention can also include intermediate connections 121 as illustrated in Figure 12. In this case the plane includes conduits 122 for intermediate connections 121. Furthermore, the arrangement includes connection means 123 for each intermediate connection 121, connected to the supply to the first end of the pressure element through at least one choke valve 124. The supply of the control means 6 to the second end of the pressure element is arranged in any of the manners described above.

Connection of the intermediate connections 121 of the pressure element 3 to the supply of the control means 6 through which the pressure medium can flow into the pressure element and out of the pressure element through its first end creates an arrangement that can be used for moving sequential cylindrical objects located on the top of the pressure element. The choke valve 124 provides the desired flow of the pressure medium to the intermediate connections. It is also possible that several or all of the intervals 125 between the intermediate connections have separate choke valves.

The arrangements according to the invention are suitable for cylindrical objects of different sizes (and weights). The pressure element 3 can be a compressible hose or compressible mat, and these can be arranged in parallel, staggered or sequentially. The control means 6 can be placed below or near the plane. The control means can be used to control several pressure elements if fitted with connections for each pressure element. The connections for pressure elements can comprise a spring-loaded non-return valve. Even though the examples in the figures mostly illustrate open circulations of pressure medium, control means can also be created for closed circulations of pressure medium.

The markings of the connections of the directional valves can be different than the markings illustrated in the examples in the Figures. The markings of the connections are only included to facilitate the operation of the directional valve in relation to the other components and thus do not limit the use of a similar directional valve or another type of directional valve for the same purpose. The directional valves can also be of a different type than described in the examples of this text.

It is evident from the above that an arrangement according to the invention can be implemented in several different ways.

It is also evident that the invention is not limited to the examples mentioned in this text but can be implemented in many other different embodiments within the scope of the inventive idea.

## Claims

1. An arrangement for controlling the rolling motion of a cylindrical object (1), said arrangement comprising at least one compressible pressure element (3) to be filled with a pressure medium, said pressure element comprising a first end and a second end, wherein the arrangement comprises a fixed plane (2, 22) comprising conduits (4) through which the first and second ends of the pressure element (3) located on top of the fixed plane are conducted to the underside of the plane, the conduit for the first end being located at a different part of the line of rolling the cylindrical object than the conduit for the second end,
control means (6) for filling the at least one pressure element (3) with a pressure medium and draining it of the pressure medium,
connection means (5) for both ends of the pressure element, by which connection means the at least one pressure element (3) can be connected to the control means (6),
by which control means (6) the at least one pressure element (3) can be filled in a controlled manner through either or both ends of the at least one pressure element (3), as well as drained in a controlled manner through either or both ends, and
allowing the state of motion of a cylindrical object located on top of the plane (2) and the at least pressure element (3) to be changed in a controlled manner.

2. An arrangement according to Claim 1, **characterised in that** the plane (2) is in a horizontal position or in an inclined position in relation to the horizontal.

3. An arrangement according to Claim 2, **characterised in that** the plane (2) comprises a sheet or mat on top of which the pressure element (3) is essentially located.

4. An arrangement according to Claim 3, **characterised in that** the conduit (4) is an opening or an edge area of the plane.

5. An arrangement according to Claim 2, **characterised in that** the plane (2) comprises a surface made of concrete on top of which the pressure element (3) is essentially located.

6. An arrangement according to Claim 5, **characterised in that** the conduit (4) is a recess or opening in the concrete.

7. An arrangement according to either of the Claims 4 or 6, **characterised in that** the pressure element (3) is a compressible hose or compressible mat.

8. An arrangement according to Claim 7, **characterised in that** there are at least two pressure elements (3) in parallel on the plane.

9. An arrangement according to Claim 8, **characterised in that** the parallel pressure elements (3) are placed in a staggered arrangement.

10. An arrangement according to any of the Claims 4, 6, 7, 8 or 9, **characterised in that** there are at least two pressure elements (3) in sequence on the plane.

11. An arrangement according to any of the Claims 7, 8, 9 or 10, **characterised in that** the control means (6) can be placed below or near the plane.

12. An arrangement according to Claim 11, **characterised in that** the control means (6) comprise a supply connection (20) to an external source of pressure medium,
a pressure relief valve (32) connected to the supply connection (20) to limit the pressure of the pressure medium,
a pressure gauge (37) to indicate the pressure limited by the pressure relief valve,
a first choke valve (33) connected to the pressure relief valve on the side of pressure to be limited,
a second choke valve (36) to limit the flow of the pressure medium from the pressure element to outside the control means (6) and
a pressure control valve module (34) that can be connected to the connection means (5) at the ends of the pressure element (3) and is connected to the first choke valve (33) and the second choke valve (36), said module controlling the filling of the pressure element with the pressure medium and draining it of the pressure medium.

13. An arrangement according to Claim 12, **characterised in that** the control means (6) further comprise
a non-return valve (48) connected to the supply connection (20) to prevent the flow of the pressure medium from the control means (6) to the external source of pressure medium,
a pressure medium tank (49) connected to the non-return valve (48) of the supply connection (20) and the pressure relief valve (32),
non-return valves (42) specific to the connection means that can be connected to each connection means (5) and are connected to the pressure control valve module (34) to allow the pressure medium to flow into the pressure element (3); they can be controlled so that when driven, they allow the pressure medium to flow out of the pressure element (3), the exhaust flow going through each connection means being routed through the pressure control valve module (34) and the second choke valve (36) to outside the control means (6).

14. An arrangement according to Claim 11, **characterised in that** the control means (6) comprise a supply connection (20) to an external source of pressure medium,
a pressure relief valve (32) connected to the supply connection (20) to limit the pressure of the pressure medium,
a pressure gauge (37) to indicate the pressure limited by the pressure relief valve,
a one-way restrictor valve (52) connected to the pressure relief valve on the side of pressure to be limited so that it allows free flow of the pressure medium towards the pressure element (3); the one-way restrictor valve (52) can also be functionally connected to the connection means (5) of the pressure element (3), and
a choke valve (53) and a non-return valve (54) between the connection means (5) at the second end of the pressure element and the one-way restrictor valve (52), the non-return valve (54) preventing the flow of the pressure medium towards the pressure element.

15. An arrangement according to Claim 11, **characterised in that** the control means (6) comprise a supply connection (20) to an external source of pressure medium,
non-return valves (67, 54) specific to the connection means that can be connected to each connection means to allow the pressure medium to flow out of the pressure element (3) when the pressure of the pressure medium within the pressure element is sufficiently high, at least one of the non-return valves (67, 54) being controllable so that it allows the pressure medium to flow into the pressure element (3),
a directional valve (62) to control the flow of the pressure medium into and out of the pressure element, one connection of the directional valve being connected to the supply connection (20) and another connection being functionally connected to the non-return valves specific to the connection means (67, 54),
a pressure relief valve (32) connected to the second connection of the directional valve (62) to limit the pressure of the pressure medium in the section of the control means connected to the non-return valve (67) at the first end of the pressure element (3),
a pressure gauge (37) to indicate the pressure limited by the pressure relief valve,
a one-way restrictor valve (52) connected to the pressure relief valve (32) on the side of pressure to be limited and to the non-return valve (67) at the first end of the pressure element (3), allowing free flow of the pressure medium towards the pressure element,
a pressure switch (68) connected to the connection between the one-way restrictor valve (52) and the connected non-return valve (67) to indicate the pressure of the pressure medium and provide a control signal for the directional valve (62), the third connection of the directional valve being connected to a volume outside the control means.

16. An arrangement according to Claim 15, **characterised in that** the control means (6) further comprise a non-return valve (48) between the supply connection (20) and the directional valve (62) to prevent the flow of the pressure medium from the control means (6) to the external source of pressure medium.

17. An arrangement according to Claim 11, **characterised in that** the control means (6) comprise a supply connection (20) to an external source of pressure medium,
non-return valves (67, 54) specific to the connection means that can be connected to each connection means to allow the pressure medium to flow out of the pressure element (3) when the pressure of the pressure medium within the pressure element is sufficiently high, at least one of the non-return valves (67, 54) being controllable so that it allows the pressure medium to flow into the pressure element (3),
a pressure relief valve (32) connected to the supply connection (20),
a pressure gauge (37) to indicate the pressure limited by the pressure relief valve,
a first one-way restrictor valve (52) connected to the pressure relief valve (32) on the side of pressure to limited, allowing free flow of the pressure medium towards the pressure element,
a first directional valve (72) with its first connection connected to the connection between the supply connection (20) and the pressure relief valve (32) and the second connection connected to the non-return valve (54) specific to the connection means at the second end of the pressure element,
a second directional valve (74) with its first connection connected to the first one-way restrictor valve (52) and the second connection connected to said controllable non-return valves (67), said directional valve (74) being controllable by the pressure in the third connection of the first directional valve (72),
a second one-way restrictor valve (46) connected to the third connection of the second directional valve (74) and restricting the flow of the pressure medium to the volume outside the control means,
a pressure switch (68) connected to the connection between the second directional valve (74) and the connected non-return valve (67) to indicate the pressure of the pressure medium and provide a control signal for the first directional valve (72), the fourth and fifth connection of the directional valve being connected to a volume outside the control means;
when the pressure switch (68) detects an increase of pressure, it provides a control signal to the first directional valve (72), the first directional valve changes the direction of the pressure medium to the fourth connection instead of the second one, whereupon the second directional valve (74) guides the flow of the pressure medium through the second one-way restrictor valve to a volume outside the control means.

18. An arrangement according to Claim 11, **characterised in that** the control means (6) comprise a supply connection (20) to an external source of pressure medium,
non-return valves (67, 54) specific to the connection means that can be connected to each connection means to allow the pressure medium to flow out of the pressure element (3) when the pressure of the pressure medium within the pressure element is sufficiently high, at least one of the non-return valves (67, 54) being controllable so that it allows the pressure medium to flow into the pressure element (3),
a pressure relief valve (32) connected to the supply connection (20),
a pressure gauge (37) to indicate the pressure limited by the pressure relief valve,
a one-way restrictor valve (52) connected to the pressure relief valve (32) on the side of pressure to be limited, allowing free flow of the pressure medium towards the pressure element,
a first quick exhaust valve (89) with its non-return valve input connected to the pressure relief valve (52) and the intermediate input connected to a controllable non-return valve (67) at the first end of the pressure element,
a pressure switch (68) connected to the connection between the intermediate input of the first quick exhaust valve and the non-return valve (67) to detect an increase of the pressure of the pressure medium and provide a control signal,
a first directional valve (72) with its first connection connected to the connection between the supply connection (20) and the pressure relief valve (32) and the second connection connected to the non-return valve (54) specific to the connection means at the second end of the pressure element, and the fourth and fifth connections connected to a volume outside the control means,
a second directional valve (82) with its first connection connected to the third connection of the first directional valve (72), the second and fifth connections closed, and the fourth connection connected to a volume outside the control means,
a second pressure relief valve (811) with the limited pressure side connected to the output of the first quick exhaust valve (89) and the other side connected to the third connection of the second directional valve (82),
a second pressure gauge (812) to indicate the pressure limited by the second pressure relief valve,
a second quick exhaust valve (86) with its output connected to the connection between the second pressure relief valve (811) and the second directional valve (82), its non-return valve input connected to the connection between the first directional valve (72) and the non-return valve (54) at the second end of the pressure element, and its intermediate input connected to the control of the controlled non-return valve (67).

19. An arrangement according to Claim 17 or 18, **characterised in that** the control means comprise a non-return valve (48) connected to the supply connection (20) to prevent the flow of the pressure medium from the control means (6) to the external source of pressure medium, and
a pressure medium tank (49) connected to the non-return valve (48) at the supply connection (20), the pressure relief valve (32) and the other components of the arrangement that use the pressure medium flowing from the supply connection (20).

20. An arrangement according to Claim 11, **characterised in that** the control means comprise a closed circulation of the pressure medium.

21. An arrangement according to any of the Claims from 12 to 20, **characterised in that** the arrangement comprises at least two arrangements (92, 93, 94) sequentially on the axis of rolling.

22. An arrangement according to Claim 21, **characterised in that** the sequential arrangements (92, 93, 94) are arranged so that at least some of the pressure elements are staggered between the sequential arrangements.

23. An arrangement according to any of the Claims from 1 to 22, **characterised in that** at least one pressure element (3) within the arrangement includes intermediate connections (121), the plane includes conduits (122) for the intermediate connections and connection means (123) for each intermediate connection (121), the connection means specific to intermediate connections being connected to the supply to the first end of the pressure element through at least one choke valve (124).

24. An arrangement according to any of the Claims from 1 to 23, **characterised in that** the pressure medium is gas or liquid.

## Patentansprüche

1. Anordnung zur Steuerung der Rollbewegung eines zylindrischen Objekts (1), welche Anordnung wenigstens ein komprimierbares Druckelement (3) aufweist, welches mit einem Druckmedium zu füllen ist, welches Druckelement ein erstes und ein zweites Ende aufweist, wobei die Anordnung eine feste Ebene (2, 22) enthält, die Leitungen (4) aufweist, durch welche das erste und zweite Ende des auf der Oberseite der Ebene angeordneten Druckelements (3) zur Unterseite der Ebene geführt sind, wobei die Leitung für das erste Ende an einem anderen Teil der Rolllinie des zylindrischen Objekts angeordnet ist, als die Leitung für das zweite Ende,
Steuermittel (6), zum Füllen des wenigstens einen Druckelements (3) mit einem Druckmedium und zum Ableiten des Druckmediums,
Verbindungsmittel (5) für beide Enden des Druckelements, durch welche Verbindungsmittel das wenigstens eine Druckelement (3) mit den Steuermitteln (6) verbunden werden kann,
durch welche Steuermittel (6) das wenigstens eine Druckelement (3) in einer kontrollierten Weise durch eines der beiden Enden oder beide Enden des wenigstens einen Druckelements (3) gefüllt als auch in kontrollierter Weise durch beide oder eines der beiden Enden entleert werden kann, und
die es erlauben, den Bewegungsstatus eines auf der Oberseite der Ebene (2) angeordneten zylindrischen Objekts und des wenigstens einen Druckelements (3) in kontrollierter Weise zu ändern.

2. Anordnung nach Anspruch 1, **dadurch gekennzeichnet, dass** sich die Ebene (2) in einer horizontalen Position oder in einer gegenüber der Horizontalen geneigten Position befindet.

3. Anordnung nach Anspruch 2, **dadurch gekennzeichnet, dass** die Ebene (2) ein Tuch oder eine Matte enthält, auf deren Oberseite das Druckelement (3) im Wesentlichen angeordnet ist.

4. Anordnung nach Anspruch 3, **dadurch gekennzeichnet, dass** die Leitung (4) eine Öffnung oder ein Kantenbereich der Ebene ist.

5. Anordnung nach Anspruch 2, **dadurch gekennzeichnet, dass** die Ebene (2) eine Oberfläche aus Beton aufweist, auf deren Oberseite das Druckelement (3) im Wesentlichen angeordnet ist.

6. Anordnung nach Anspruch 5, **dadurch gekennzeichnet, dass** die Leitung (4) eine Vertiefung oder Öffnung in dem Beton ist.

7. Anordnung nach einem der Ansprüche 4 oder 6, **dadurch gekennzeichnet, dass** das Druckelement (3) ein komprimierbarer Schlauch oder eine komprimierbare Matte ist.

8. Anordnung nach Anspruch 7, **dadurch gekennzeichnet, dass** sich wenigstens zwei parallel zueinander angeordnete Druckelemente (3) auf der Ebene befinden.

9. Anordnung nach Anspruch 8, **dadurch gekennzeichnet, dass** die parallelen Druckelemente (3) versetzt zueinander angeordnet sind.

10. Anordnung nach einem der Ansprüche 4, 6, 7, 8 oder 9, **dadurch gekennzeichnet, dass** sich wenigstens zwei Druckelemente (3) aufeinanderfolgend auf der Ebene befinden.

11. Anordnung nach einem der Ansprüche 7, 8, 9 oder 10, **dadurch gekennzeichnet, dass** die Steuermittel (6) unter oder nahe der Ebene angeordnet werden können.

12. Anordnung nach Anspruch 11, **dadurch gekennzeichnet, dass** die Steuermittel (6) eine Versorgungsverbindung (20) zu einer externen Quelle eines Druckmediums aufweisen, ein Druckentspannungsventil (32), das mit der Versorgungsverbindung (20) verbunden ist, um den Druck des Druckmediums zu begrenzen,
einen Druckmesser (37), um den Druck anzuzeigen, der durch das Druckentspannungsventil begrenzt wird,
ein erstes Drosselventil (33), das mit dem Druckentspannungsventil auf der Seite des zu begrenzenden Drucks verbunden ist,
ein zweites Drosselventil (36), um den Fluss des Druckmediums von dem Druckelement in einen Bereich außerhalb der Steuermittel (6) zu begrenzen und
ein Drucksteuerventilmodul (34), das mit den Verbindungsmitteln (5) an den Enden des Druckelements (3) verbunden werden kann und mit dem ersten Drosselventil (33) und dem zweiten Drosselventil (36) verbunden ist, welches Modul das Befüllen des Druckelements mit dem Druckmedium und das Entleeren des Druckmediums daraus steuert.

13. Anordnung nach Anspruch 12, **dadurch gekennzeichnet, dass** die Steuermittel (6) weiterhin umfassen:
ein Einwegventil (48), das mit der Versorgungsverbindung (20) verbunden ist, um den Fluss des Druckmediums von den Steuermitteln (6) zur externen Quelle des Druckmediums zu verhindern,
einen Druckmitteltank (49), der mit dem Einwegventil (48) der Versorgungsverbindung (20) und dem Druckentspannungsventil (32) verbunden ist,
Einwegventile (42), die bestimmt sind für die Verbindungsmittel, welche mit jedem Verbindungsmittel (5) verbunden werden können und verbunden sind mit dem Drucksteuerventilmodul (34), um es zu ermöglichen, dass das Druckmittel in das Druckelement (3) fließt; wobei sie so gesteuert werden können, dass, wenn sie betätigt werden, sie es dem Druckmedium ermöglichen, aus dem Druckelement (3) herauszufließen, welcher Abfluss durch alle Verbindungsmittel geht, die über das Drucksteuerventilmodul (34) und das zweite Drosselventil (36) zu einem Bereich außerhalb der Steuermittel (6) geführt sind.

14. Anordnung nach Anspruch 11, **dadurch gekennzeichnet, dass** die Steuermittel (6) eine Versorgungsverbindung (20) zu einer externen Quelle eines Druckmediums enthalten, ein Druckentspannungsventil (32), welches mit der Versorgungsverbindung (20) verbunden ist, um den Druck des Druckmediums zu begrenzen,
eine Druckanzeige (37) zur Anzeige des Drucks, der von dem Druckentspannungsventil begrenzt wird,
ein Einwegbegrenzungsventil (52), das mit dem Druckentspannungsventil auf der Seite des zu begrenzenden Drucks verbunden ist, so dass es einen freien Fluss des Druckmediums in Richtung auf das Druckelement (3) erlaubt; wobei das Einwegbegrenzungsventil (52) auch funktionell mit den Verbindungsmitteln (5) des Druckelements (3) verbunden werden kann, und
ein Drosselventil (53) und ein Einwegventil (54) zwischen den Verbindungsmitteln (5) an dem zweiten Ende des Druckelements und dem Einwegbegrenzungsventil (52), wobei das Einwegventil (54) den Fluss des Druckmediums in Richtung des Druckelements verhindert.

15. Anordnung nach Anspruch 11, **dadurch gekennzeichnet, dass** die Steuermittel (6) eine Versorgungsverbindung (20) zu einer externen Quelle eines Druckmediums aufweisen, Einwegventile (67, 54), die für die Verbindungsmittel bestimmt sind, die mit jedem der Verbindungsmittel verbunden werden können, um es dem Druckmedium zu erlauben, aus dem Druckelement (3) herauszufließen, wenn der Druck des Druckmediums in dem Druckelement ausreichend hoch ist, wobei wenigstens eines der Einwegventile (67, 54) so steuerbar ist, dass es dem Druckmedium erlaubt, in das Druckelement (3) zu fließen, ein Richtungsventil (62), um den Fluss des Druckmediums in und aus dem Druckelement zu steuern, wobei ein Anschluss des Richtungsventils mit der Versorgungsverbindung (20) und eine anderer Anschluss funktionell mit den Einwegventilen verbunden ist, die für die Verbindungsmittel (67, 54) bestimmt sind,
ein Druckentspannungsventil (32), das mit dem zweiten Anschluss des Richtungsventils (62) verbunden ist, um den Druck des Druckmediums in dem Abschnitt der Steuermittel zu begrenzen, der mit dem Einwegventil (67) an dem ersten Ende des Druckelements (3) verbunden ist,
eine Druckanzeige (67), um den Druck anzuzeigen, der durch das Druckentspannungsventil begrenzt ist,
ein Einwegbegrenzungsventil (52), das mit dem Druckentspannungsventil (32) auf der Seite des begrenzenden Drucks verbunden ist und mit dem Einwegventil (67) an dem ersten Ende des Druckelements (3), was einen freien Fluss des Druckmediums in Richtung des Druckelements erlaubt,
einen Druckschalter (68), der mit der Verbindung zwischen dem Einwegbegrenzungsventil (62) und dem verbundenen Einwegventil (67) verbunden ist, um den Druck des Druckmediums anzuzeigen und ein Steuersignal für das Richtungsventil (62) bereitzustellen, wobei der dritte Anschluss des Richtungsventils mit einem Volumen außerhalb der Steuermittel verbunden ist.

16. Anordnung nach Anspruch 15, **dadurch gekennzeichnet, dass** die Steuermittel (6) weiterhin ein Einwegventil (48) zwischen der Versorgungsverbindung (20) und dem Richtungsventil (62) aufweisen, um den Fluss des Druckmediums von den Steuermitteln (6) zu der externen Quelle des Druckmediums zu verhindern.

17. Anordnung nach Anspruch 11, **dadurch gekennzeichnet, dass** die Steuermittel (6) eine Versorgungsverbindung (20) zu einer externen Quelle eines Druckmediums enthalten, Einwegventile (67, 54), die für die Verbindungsmittel bestimmt sind, welche verbunden werden können mit jedem der Verbindungsmittel, um es dem Druckmedium zu ermöglichen, aus dem Druckelement (3) herauszufließen, wenn der Druck des Druckmediums in dem Druckelement ausreichend hoch ist, wobei wenigstens eines der Einwegventile (67, 54) so steuerbar ist, dass es es dem Druckmedium ermöglicht, in das Druckelement (3) hineinzufließen,
ein Druckentspannungsventil (32), das mit der Versorgungsverbindung (20) verbunden ist,
eine Druckanzeige (67), um den durch das Druckentspannungsventil begrenzten Druck anzuzeigen,
ein erstes Einwegbegrenzungsventil (52), das mit dem Druckentspannungsventil (32) an der Seite des zu begrenzenden Drucks verbunden ist, was einen freien Fluss des Druckmediums in Richtung des Druckelements ermöglicht,
ein erstes Richtungsventil (72), das mit seinem ersten Anschluss mit der Verbindung zwischen der Versorgungsverbindung (20) und dem Druckentspannungsventil (32) verbunden ist, und dessen zweiter Anschluss mit dem Einwegventil (54) verbunden ist, welches für die Verbindungsmittel am zweiten Ende des Druckelements bestimmt ist, ein zweites Richtungsventil (74), das mit seinem ersten Anschluss mit dem ersten Einwegbegrenzungsventil (52) und mit seinem zweiten Anschluss mit den steuerbaren Einwegventilen (67) verbunden ist, welches Richtungsventil (74) steuerbar ist durch den Druck in dem dritten Anschluss des ersten Richtungsventils (72),
ein zweites Einwegbegrenzungsventil (46), das mit dem dritten Anschluss des zweiten Richtungsventils (74) verbunden ist und den Fluss des Druckmediums zu dem Volumen außerhalb der Steuermittel begrenzt,
einen Druckschalter (68), der verbunden ist mit der Verbindung zwischen dem zweiten Richtungsventil (74) und dem verbundenen Einwegventil (67), um den Druck des Druckmediums anzuzeigen und ein Steuersignal für das erste Richtungsventil (72) bereitzustellen, wobei der vierte und fünfte Anschluss des Richtungsventils mit einem Volumen außerhalb der Steuermittel verbunden ist;
wobei, wenn der Druckschalter (68) einen Druckanstieg detektiert, er ein Steuersignal für das erste Richtungsventil (72) bereitstellt, das erste Richtungsventil die Richtung des Druckmediums zum vierten Anschluss anstelle des zweiten ändert, woraufhin das zweite Richtungsventil (74) den Fluss des Druckmediums durch das zweite Einwegbegrenzungsventil zu einem Volumen außerhalb der Steuermittel führt.

18. Anordnung nach Anspruch 11, **dadurch gekennzeichnet, dass** die Steuermittel (6) eine Versorgungsverbindung (20) zu einer externen Quelle des Druckmediums aufweisen, Einwegventile (67, 54), die für die Verbindungsmittel bestimmt sind und die verbunden werden können mit jedem der Verbindungsmittel, um es dem Druckmedium zu erlauben, aus dem Druckelement (3) herauszufließen, wenn der Druck des Druckmediums in dem Druckelement ausreichend hoch ist, wobei wenigstens eines der Einwegventile (67, 54) so steuerbar ist, dass es dem Druckmedium erlaubt, in das Druckelement (3) hineinzufließen,
ein Druckentspannungsventil (32), das mit der Versorgungsverbindung (20) verbunden ist,
eine Druckanzeige (37), um den durch das Druckentspannungsventil begrenzten Druck anzuzeigen,
ein Einwegbegrenzungsventil (52), das mit dem Druckentspannungsventil (32) auf der Seite des zu begrenzenden Drucks verbunden ist, was einen freien Fluss des Druckmediums in Richtung auf das Druckelement erlaubt,
ein erstes Schnellauslassventil (89), das mit seinem Einwegventileingang mit dem Druckentspannungsventil (52), und dessen Zwischeneingang mit einem steuerbaren Einwegventil (67) an dem ersten Ende des Druckelements verbunden ist,
einen Druckschalter (68), der mit der Verbindung zwischen dem Zwischeneingang des ersten Schnellauslassventils und dem Einwegventil (67) verbunden ist, um einen Anstieg des Drucks des Druckmediums zu detektieren und ein Steuersignal bereitzustellen, ein erstes Richtungsventil (72), dessen erster Anschluss mit der Verbindung zwischen der Versorgungsverbindung (20) und dem Druckentspannungsventil (32) verbunden ist und dessen zweiter Anschluss mit dem für die Verbindungsmittel bestimmten Einwegventil (54) an dem zweiten Ende des Druckelements verbunden ist und dessen vierte und fünfte Anschlüsse mit einem Volumen außerhalb der Steuermittel verbunden sind,
ein zweites Richtungsventil (82), dessen erster Anschluss mit dem dritten Anschluss des ersten Richtungsventils (72) verbunden ist, dessen zweiter und fünfter Anschluss geschlossen sind und dessen vierter Anschluss mit einem Volumen außerhalb der Steuermittel verbunden ist,
ein zweites Druckentspannungsventil (811), das mit der Druckbegrenzungsseite mit dem Ausgang des ersten Schnellauslassventils (89) verbunden ist und dessen andere Seite mit dem dritten Anschluss des zweiten Richtungsventils (82) verbunden ist,
eine zweite Druckanzeige (812), um den durch das zweite Druckentspannungsventil begrenzten Druck anzuzeigen,
ein zweites Schnellauslassventil (86), dessen Auslass mit der Verbindung zwischen dem zweiten Druckentspannungsventil (811) und dem zweiten Richtungsventil (82) verbunden ist, dessen Einwegventileingang mit der Verbindung zwischen dem ersten Richtungsventil (72) und dem Einwegventil (54) an dem zweiten Ende des Druckelements verbunden ist, und dessen Zwischeneingang mit der Steuerung des gesteuerten Einwegventils (67) verbunden ist.

19. Anordnung nach Anspruch 17 oder 18, **dadurch gekennzeichnet, dass** die Steuermittel ein Einwegventil (48) aufweisen, das mit der Versorgungsverbindung (20) verbunden ist, um einen Fluss des Druckmediums von den Steuermitteln (6) zu der externen Quelle des Druckmediums zu verhindern, und
ein Druckmitteltank (49), der mit dem Einwegventil (48) an der Versorgungsverbindung (20), dem Druckentspannungsventil (32) und den anderen Komponenten der Anordnung verbunden ist, die das von der Versorgungsverbindung (20) fließende Druckmedium verwenden.

20. Anordnung nach Anspruch 11, **dadurch gekennzeichnet, dass** die Steuermittel eine geschlossene Zirkulation des Druckmediums enthalten.

21. Anordnung nach einem der Ansprüche 12 - 20, **dadurch gekennzeichnet, dass** die Anordnung wenigstens zwei Anordnungen (92, 93, 94) enthält, die sequentiell in Richtung der Rollachse aufeinanderfolgen.

22. Anordnung nach Anspruch 21, **dadurch gekennzeichnet, dass** die aufeinanderfolgenden Anordnungen (92, 93, 94) so angeordnet sind, dass zumindest einige der Druckelemente zwischen den aufeinanderfolgenden Anordnungen versetzt sind.

23. Anordnung nach einem der Ansprüche 1 - 22, **dadurch gekennzeichnet, dass** wenigstens ein Druckelement (3) in der Anordnung Zwischenanschlüsse (121) enthält, die Ebene Verbindungen (122) für die Zwischenanschlüsse enthält und Verbindungsmittel (123) für jede Zwischenanschluss (121), wobei die für die Zwischenanschlüsse bestimmten Verbindungsmittel mit der Zufuhr des ersten Endes des Druckelements über wenigstens ein Drosselventil (124) verbunden sind.

24. Anordnung nach einem der Ansprüche 1 - 23, **dadurch gekennzeichnet, dass** das Druckmedium ein Gas oder eine Flüssigkeit ist.

## Revendications

1. Dispositif pour contrôler le mouvement de roulement d'un objet cylindrique (1), ledit dispositif comprenant au moins un élément de pression compressible (3) à remplir avec un moyen de pression, ledit élément de pression comprenant une première extrémité et une seconde extrémité, lequel dispositif comprend un plan fixe (2, 22) comprenant des conduits (4) à travers lesquels la première et la seconde extrémité de l'élément de pression (3) situé au-dessus du plan fixe sont conduites pour les faire passer sous le plan, le conduit pour la première extrémité étant placé dans une partie différente de la ligne de roulement de l'objet cylindrique que le conduit pour la seconde extrémité,
moyens de contrôle (6) pour remplir au moins un élément de pression (3) avec un moyen de pression et pour le vider de ce moyen de pression,
moyen de raccordement (5) pour les deux extrémités de l'élément de pression, par lequel moyen de raccordement au moins un élément de pression (3) peut être raccordé aux moyens de contrôle (6),
par lesquels moyens de contrôle (6) on peut remplir au moins un élément de pression (3) de manière contrôlée soit à travers l'une ou les deux extrémités du moins un élément de pression (3), de même que l'on peut le vider de manière contrôlée à travers une ou les deux extrémités, et
permettant de changer de manière contrôlée l'état de mouvement de l'objet cylindrique situé sur le plan (2) et l'état du moins un élément de pression (3).

2. Dispositif selon la revendication 1, **caractérisé en ce que** le plan (2) est en position horizontale ou dans une position inclinée par rapport à l'horizontale.

3. Dispositif selon la revendication 2, **caractérisé en ce que** le plan (2) comprend une plaque ou un coussinet sur lequel l'élément de pression (3) est essentiellement placé.

4. Dispositif selon la revendication 3, **caractérisé en ce que** le conduit (4) est une ouverture ou une zone lisière du plan.

5. Dispositif selon la revendication 2, **caractérisé en ce que** le plan (2) comprend une surface en béton sur lequel l'élément de pression (3) est essentiellement posé.

6. Dispositif selon la revendication 5, **caractérisé en ce que** le conduit (4) est un renfoncement ou une ouverture dans le béton.

7. Dispositif selon l'une quelconque des revendications 4 à 6, **caractérisé en ce que** l'élément de pression (3) est un tuyau flexible compressible ou un coussinet compressible.

8. Dispositif selon la revendication 7, **caractérisé en ce qu'**il y au moins deux éléments de pression (3) en parallèle sur le plan.

9. Dispositif selon la revendication 8, **caractérisé en ce que** les éléments de pression (3) parallèles sont agencés de manière déplacée.

10. Dispositif selon l'une quelconque des revendications 4, 6, 7, 8, 9, **caractérisé en ce qu'**il y au moins deux éléments de pression (3) en séquence sur le plan.

11. Dispositif selon l'une quelconque des revendications 7, 8, 9 ou 10, **caractérisé en ce que** les moyens de contrôle (6) peuvent être placés au dessous ou près du plan.

12. Dispositif selon la revendication 11, **caractérisé en ce que** les moyens de contrôle (6) comprennent une connexion d'alimentation (20) vers une source externe de moyen de pression,
un clapet de décharge (32) raccordé à la connexion d'alimentation (20) pour limiter la pression du moyen de pression,
un manomètre (37) pour indiquer la pression limitée par le clapet de décharge,
un première clapet d'étranglement (33) raccordé au clapet de décharge sur le côté où la pression est à limiter,
un second clapet d'étranglement (36) pour limiter le débit du moyen de pression depuis l'élément de pression à l'extérieur des moyens de contrôle (6) et
un module de clapet de contrôle de pression (34) qui peut être connecté aux moyens de raccordement (5) aux extrémités de l'élément de pression (3) et qui est connecté au premier clapet d'étranglement (33) et au second clapet d'étranglement (36), ledit module contrôlant le remplissage de l'élément de pression avec le moyen de pression et le vidage de l'élément de ce moyen de pression.

13. Dispositif selon la revendication 12, **caractérisé en ce que** les moyens de contrôle (6) comprennent en plus
un clapet de non retour (48) raccordé à la connexion d'alimentation (20) pour empêcher le débit du moyen de pression depuis les moyens de contrôle (6) vers la source externe de moyen de pression,
un réservoir de moyen de pression (49) raccordé au clapet de non-retour (48) de la connexion d'alimentation (20) et au clapet de décharge (32),
clapets de non-retour (42) spécifiques au moyen de connexion qui peuvent être raccordés à chacun des moyens de connexion (5) et qui sont raccordés au module de clapet de contrôle de pression (34) pour permettre le passage du moyen de pression dans l'élément de pression (3); ils peuvent être contrôlés de manière que lorsqu'ils sont activés, ils permettent l'évacuation du moyen de pression de l'élément de pression (3), le débit d'échappement passant par chaque moyen de connexion et étant acheminé à travers le module de contrôle de pression (34) et le second clapet d'étranglement (36) à l'extérieur des moyens de contrôle (6).

14. Dispositif selon la revendication 11, **caractérisé en ce que** les moyens de contrôle (6) comprennent une connexion d'alimentation (20) vers une source externe de moyen de pression,
un clapet de décharge (32) raccordé à la connexion d'alimentation (20) pour limiter la pression du moyen de pression,
un manomètre (37) pour indiquer la pression limitée par le clapet de décharge,
un clapet freineur unidirectionnel (52) raccordé au clapet de décharge sur le côté où la pression est à limiter de manière à ce qu'il permette le débit du moyen de pression vers l'élément de pression (3); le clapet freineur unidirectionnel (52) peut être raccordé opérationnellement aux moyens de connexion (5) de l'élément de pression (3), et
un clapet d'étranglement (53) et un clapet de non-retour (54) entre les moyens de connexion (5) dans la seconde extrémité de l'élément de pression et le clapet freineur unidirectionnel (52), le clapet de non-retour (54) empêchant le débit du moyen de pression vers l'élément de pression.

15. Dispositif selon la revendication 11, **caractérisé en ce que** les moyens de contrôle (6) comprennent une connexion d'alimentation (20) à une source externe de moyen de pression,
des clapets de non-retour (67, 54) spécifiques aux moyens de connexion et qui peuvent être raccordés à chaque moyen de connexion pour permettre au moyen de pression de sortir de l'élément de pression (3) lorsque la pression du moyen de pression à l'intérieur de l'élément de pression est suffisamment élevée, au moins un des clapets de non-retour (67, 54) étant contrôlables de manière à permettre au moyen de pression de passer dans l'élément de pression (3),
un clapet directionnel (62) pour contrôler le débit du moyen de pression entrant dans et sortant de l'élément, une connexion du clapet directionnel étant reliée à la connexion d'alimentation (20) et une autre connexion étant reliée de manière opérationnelle aux clapets de non-retour spécifiques aux moyens de connexion (67, 54).
un clapet de décharge de pression (32) raccordé à la deuxième connexion du clapet directionnel (62) pour limiter la pression du moyen de pression dans la section des moyens de contrôle raccordés au clapet de non-retour (67) dans la première extrémité de l'élément de pression (3).
un manomètre (37) pour indiquer la pression limitée par le clapet de décharge,
un clapet freineur unidirectionnel (52) raccordé au clapet de décharge (32) sur le côté où la pression est à limiter et au clapet de non-retour (67) dans la première extrémité de l'élément de pression (3), permettant un débit libre du moyen de pression vers l'élément de pression,
un contacteur de pression (68) raccordé à la connexion entre le clapet freineur unidirectionnel (52) et le clapet de non-retour (67) pour indiquer la pression du moyen de pression et pour fournir un signal de contrôle au clapet directionnel (62), la troisième connexion du clapet directionnel étant raccordé au volume à l'extérieur du moyen de contrôle.

16. Dispositif selon la revendication 15, **caractérisé en ce que** les moyen de contrôle (6) comprennent en plus un clapet de non-retour (48) entre la connexion d'alimentation (20) et le clapet directionnel (62) pour empêcher le débit du moyen de pression depuis les moyens de contrôle (6) vers la source externe de moyen de pression.

17. Dispositif selon la revendication 11, **caractérisé en ce que** les moyens de contrôle (6) comprennent une connexion d'alimentation (20) vers une source externe de moyen de pression,
des clapets de non-retour (67, 54) spécifiques aux moyens de connexion qui peuvent être connectés à chaque moyen de connexion pour permettre au moyen de pression de sortir de l'élément de pression (3), lorsque la pression du moyen de pression à l'intérieur de l'élément de pression est suffisamment élevée, au moins un des clapets de non-retour (67, 54) étant contrôlable de manière à permettre au moyen de pression d'entrer dans l'élément de pression (3),
un clapet de décharge de pression (32) raccordé à la connexion d'alimentation (20),
un manomètre (37) pour indiquer la pression limitée par le clapet de décharge,
un premier clapet freineur unidirectionnel (52) raccordé au clapet de décharge de pression (32) sur le côté où la pression doit être limitée, permettant un débit libre du moyen de pression vers l'élément de pression,
un premier clapet directionnel (72) avec sa première connexion raccordée à la connexion entre la connexion d'alimentation (20) et le clapet de décharge de pression (32) et la seconde connexion raccordée au clapet de non-retour (54) spécifique aux moyens de connexion dans la seconde extrémité de l'élément de pression,
un second clapet directionnel (74) avec sa première connexion raccordée au premier clapet freineur unidirectionnel (52) et la seconde connexion raccordée auxdits clapets de non-retour contrôlables (67), ledit clapet directionnel (74) étant contrôlable par la pression dans la troisième connexion du premier clapet directionnel (72),
un second clapet freineur unidirectionnel (46) raccordé à la troisième connexion du second clapet directionnel (74) et limitant le débit du moyen de pression vers le volume à l'extérieur des moyens de contrôle,
un contacteur de pression (68) raccordé à la connexion entre le second clapet directionnel (74) et le clapet de non-retour (67) connecté pour indiquer la pression du moyen de pression et pour fournir un signal de contrôle au premier clapet directionnel (72), la quatrième et le cinquième connexion du clapet directionnel étant raccordées au volume à l'extérieur des moyens de contrôle ;
lorsque le contacteur de pression (68) détecte une augmentation de pression, il fournit un signal de contrôle au premier clapet directionnel (72), et le premier clapet directionnel change la direction du moyen de pression vers la quatrième connexion au lieu de la seconde connexion, le second clapet directionnel (74) guidant alors le débit du moyen de pression à travers le second clapet freineur unidirectionnel vers un volume à l'extérieur des moyens de contrôle.

18. Dispositif selon la revendication 11, **caractérisé en ce que** les moyens de contrôle (6) comprennent une connexion d'alimentation (20) vers une source externe de moyen de pression,
des clapets de non-retour (67, 54) spécifiques aux moyens de connexion qui peuvent être connectés à chaque moyen de connexion pour permettre au moyen de pression de sortir de l'élément de pression (3), lorsque la pression du moyen de pression à l'intérieur de l'élément de pression est suffisamment élevée, au moins un des clapets de non-retour (67, 54) étant contrôlable de manière à permettre au moyen de pression d'entrer dans l'élément de pression (3),
un clapet de décharge de pression (32) raccordé à la connexion d'alimentation (20),
un manomètre (37) pour indiquer la pression limitée par le clapet de décharge,
un clapet freineur unidirectionnel (52) raccordé au clapet de décharge (32) sur le côté où la pression est à limiter, permettant un débit libre du moyen de pression vers l'élément de pression,
une première soupape d'échappement rapide (89) avec son entrée de clapet de non-retour raccordée au clapet de décharge de pression (52) et l'entrée intermédiaire raccordée à un clapet de non-retour contrôlable (67) dans la première extrémité de l'élément de pression,
un contacteur de pression (68) raccordé à la connexion entre l'entrée intermédiaire de la première soupape d'échappement rapide et le clapet de non-retour (67) pour détecter une augmentation de pression du moyen de pression et pour fournir un signal de contrôle,
un premier clapet directionnel (72) avec sa première connexion raccordée à la connexion entre la connexion d'alimentation (20) et le clapet de décharge de pression (32) et la seconde connexion raccordée au clapet de non-retour (54) spécifique au moyen de connexion dans la seconde extrémité de l'élément de pression, et la quatrième et la cinquième connexion raccordée au volume à l'extérieur des moyens de contrôle,
un second clapet directionnel (82) avec sa première connexion raccordée à la troisième connexion du premier clapet directionnel (72), la seconde et la cinquième connexion fermée, et la quatrième connexion raccordée au volume à l'extérieur des moyens de contrôle,
un second clapet de décharge (811) dont le côté de la pression limitée étant raccordé à la sortie de la première soupape d'échappement rapide (89) et l'autre côté étant raccordé à la troisième connexion du second clapet directionnel (82),
un second manomètre (812) pour indiquer la pression limitée par le second clapet de décharge,
une seconde soupape d'échappement rapide (86) avec sa sortie raccordée à la connexion entre le second clapet de décharge (811) et le second clapet directionnel (82), la sortie de son clapet de non-retour étant raccordée à la connexion entre le premier clapet directionnel (72) et le clapet de non-retour (54) dans la seconde extrémité de l'élément de pression, et son entrée intermédiaire raccordée au contrôle du clapet de non-retour contrôlé (67).

19. Dispositif selon l'une quelconque des revendications 17 ou 18, **caractérisé en ce que** les moyens de contrôle comprennent un clapet de non-retour (48) raccordée à la connexion d'alimentation (20) pour empêcher le débit du moyen de pression depuis les moyens de contrôle (6) vers la source externe de moyen de pression, et
un réservoir de moyen de pression (49) raccordé au clapet de non-retour (48) dans la connexion d'alimentation (20), le clapet de décharge (32) et les autres composants du dispositif utilisant le moyen de pression venant de la connexion d'alimentation (20).

20. Dispositif selon la revendication 11, **caractérisé en ce que** les moyens de contrôle comprennent une circulation fermée du moyen de pression.

21. Dispositif selon l'une quelconque des revendications 12 à 20, **caractérisé en ce que** le dispositif comprend au moins deux dispositifs (92, 93, 94) séquentiellement sur l'axe de roulement.

22. Dispositif selon la revendication 21, **caractérisé en ce que** les dispositifs séquentiels (92, 93, 94) sont organisés de sorte qu'au moins quelques uns des éléments de pression sont déplacés entre les dispositifs séquentiels.

23. Dispositif selon l'une quelconque des revendications 1 à 22, **caractérisé en ce qu'**un élément de pression (3) au moins dans le système de dispositifs contient des connexions intermédiaires (121), le plan comportant des conduits (122) pour les connexions intermédiaires et des moyens de connexion (123) pour chaque connexion intermédiaire (121), le moyen de connexion spécifique aux connexions intermédiaires étant raccordé à l'alimentation vers la première extrémité de l'élément de pression à travers au moins un clapet d'étranglement (124).

24. Dispositif selon l'une quelconque des revendications 1 à 23, **caractérisé en ce que** le moyen de pression est un gaz ou un liquide.
